(19) **Europäisches Patentamt**

**European Patent Office**

**Office européen des brevets**

(11) Veröffentlichungsnummer: **0 098 575**

**A1**

(12) # EUROPÄISCHE PATENTANMELDUNG

(21) Anmeldenummer: **83106526.3**

(51) Int. Cl.³: **F 16 B 13/00**

(22) Anmeldetag: **04.07.83**

(30) Priorität: **05.07.82 DE 3225052**

(43) Veröffentlichungstag der Anmeldung: **18.01.84**
Patentblatt 84/3

(84) Benannte Vertragsstaaten: **AT BE CH FR GB IT LI NL SE**

(71) Anmelder: **HILTI Aktiengesellschaft, FL-9494 Schaan (LI)**

(72) Erfinder: **Vollmer, Helmut, Dipl.-Ing., Wingerten 665,
FL-9496 Balzers (LI)**

(74) Vertreter: **Berg, Wilhelm, Dr. et al, Dr. Berg, Dipl.-Ing.
Stapf, Dipl.-Ing. Schwabe, Dr. Dr. Sandmair
Mauerkircherstrasse 45, D-8000 München 80 (DE)**

(54) Widerlager mit dem Aufbringen eines Drehmomentes dienendem Betätigungsorgan für Gewindebolzen.

(57) Dem Widerlager (1) ist über eine Lötverbindung das Betätigungsorgan (2) zugeordnet, das dem Aufbringen eines Drehmomentes dient. Bei Überschreiten einer vorbestimmten Grösse des Drehmomentes wird die Lötverbindung zerstört. Zur Vorbestimmung des übertragbaren Drehmomentes weist wenigstens eines der Teile (1, 2) eine die Ausbildung der Lötverbindung flächenhaft eingrenzende Kontaktfläche (6) auf.

EP 0 098 575 A1

HILTI AKTIENGESELLSCHAFT IN SCHAAN
Fürstentum Liechtenstein

Widerlager mit dem Aufbringen eines Drehmomentes dienendem
Betätigungsorgan für Gewindebolzen

Die Erfindung betrifft ein Widerlager mit dem Aufbringen
eines Drehmomentes dienendem Betätigungsorgan für Gewindebolzen von Spreizdübeln, wobei zwischen Widerlager und Betätigungsorgan eine bei Ueberschreiten eines vorbestimmten
Drehmomentes zerstörbare, flächenhaft eingegrenzte Lötverbindung vorgesehen ist.

Widerlager in Verbindung mit Gewindebolzen sind beispielsweise auf dem Gebiet der Spreizdübel bekannt. Eine Anzahl
solcher bekannter Spreizdübel verfügt über Mittel zur Drehmoment-Steuerung bzw -Begrenzung. Hierbei kann es sich um
ein als Gewindemutter ausgebildetes, auf dem Gewindebolzen
sitzendes Widerlager handeln, mit dem über eine Sollbruchstelle ein Betätigungsorgan verbunden ist. Die Sollbruchstelle ist als im Querschnitt geschwächte Zone ausgebildet.
Das Betätigungsorgan weist einen Aussensechskant auf.

Mittels eines Ring- oder Gabelschlüssels kann über das Betätigungsorgan das Drehmoment auf das Widerlager übertragen werden. Sobald der durch die Festigkeit der Sollbruchstelle vorbestimmte Wert erreicht ist, vermag diese das an das Betätigungsorgan abgegebene Drehmoment nicht mehr zu übertragen und bricht.

Nachteile dieser bekannten Anordnung sind ein gewisser Streuwert des den Bruch auslösenden Drehmomentes und die nach dem Bruch vorhandene rauhe und bei gewissen Materialien korrosionsanfällige Bruchfläche.

Auf dem Gebiet der Schraubtechnik ist ferner ein Widerlager bekannt, mit dem über eine Lötverbindung ein Betätigungsorgan zur Uebertragung eines Drehmomentes verbunden ist. Die Lötverbindung wird durch ein als Ringscheibe ausgebildetes Organ auf einen Teil der einander zugewandten Flächen von Widerlager und Betätigungsorgan eingegrenzt. Dadurch ist der Querschnitt der Lötverbindung und damit deren Scherwiderstand vorbestimmt.

Für den Spannvorgang wird beispielsweise über einen Aussenoder Innensechskant mittels eines Werkzeugs dem Betätigungsorgan ein Drehmoment vermittelt, das über die Lötverbindung an das Widerlager übertragen wird. Ueberschreitet das Drehmoment den Scherwiderstand der Lötverbindung, kommt es zur Zerstörung derselben, so dass ein weiteres Uebertragen des Drehmoments vom Betätigungsorgan auf das Widerlager nicht mehr möglich ist.

Ein Hauptnachteil dieses bekannten, ein Betätigungsorgan aufweisenden Widerlagers besteht darin, dass die Lötstelle nicht in exakt definierter Grösse bzw Ausbildung herstellbar ist, was in wechselhaften Werten des Scherwiderstandes zum Ausdruck kommt. Die Ursachen liegen beispielsweise in der Positionierung der Ringscheibe oder in der Abstimmung der Lotmenge. Ausserdem ist ein solches zusätzliches Element vom Aufwand an Material und in der Herstellung unwirtschaftlich.

Bei den Schrauben hat die erläuterte Verbindung die Aufgabe, so rechtzeitig anzusprechen, dass ein Bruch des Gewindebolzens verhindert wird. Aus der Sicht der hier in Betracht kommenden Materialien sind gewisse Schwankungen des Scherwiderstandes akzeptabel.

Anders liegt die Problematik hingegen bei Spreizdübeln. Da gilt es, ein Mittel zu schaffen, das eine präzise Drehmoment-Steuerung bzw -Begrenzung erlaubt, nachdem auf dem Gebiet der Spreizdübel weitere massgebende Faktoren in Betracht kommen. Diese Faktoren bilden einerseits die Belastungsgrenzen von Beton und Spreizdübel, andererseits eine aus Funktionsgründen erforderliche Vorspannung im Dübel. Während für den Versagungswert der gesamten Befestigung bei geringeren Betonfestigkeiten die Belastungsgrenze des Betons massgebend ist, spielt bei höheren Betonfestigkeiten die Belastbarkeit des Spreizdübels die tragende Rolle.

Aufgrund dieser Problematik liegt der vorliegenden Erfindung damit die Aufgabe zugrunde, unter Vermeidung der geschilderten anwendungsseitigen Nachteile, zwischen Widerlager und Betätigungsorgan ein Verbindungsmittel zu schaffen, das eine den Anforderungen bei Spreizdübeln gerecht werdende Drehmoment-Steuerung bzw -Begrenzung ermöglicht.

Erfindungsgemäss wird die Aufgabe dadurch gelöst, dass zur flächenhaften Eingrenzung der Lötverbindung wenigstens eines der Teile eine der Lötverbindung dienende Kontaktfläche aufweist.

Die zur Ausbildung einer Lötverbindung geschaffene Kontaktfläche stellt einen eingegrenzten Bereich der einander zugewandten Flächen von Widerlager und Betätigungsorgan dar. Durch die Kontaktfläche selbst wird die flächenhafte Erstrekkung der Lötverbindung exakt definiert, was sich in Scherwerten geringster Streuung zeigt. Im Vergleich zu dem aus der Schraubtechnik bekannten Widerlager ist zudem die Herstellung der Lötverbindung wesentlich einfacher, da auf Dritteile zur Eingrenzung der Lötverbindung verzichtet werden kann.

Mit Vorteil ist die Kontaktfläche an einem Vorsprung angeordnet, der sich entweder am Widerlager oder am Betätigungsorgan befinden kann. Die Kontaktfläche erstreckt sich dabei über die gesamte dem anderen Teil zugewandte Fläche des Vorsprungs.

Vorzugsweise ist der Vorsprung ringförmig ausgebildet, was insbesondere bei mutterförmigen Widerlagern zweckmässig ist. Handelt es sich bei dem Widerlager um einen Schraubenkopf, so kann der Vorsprung auch als zylindrischer oder kegelstumpfförmiger Zapfen gestaltet sein. Eine ringförmige Ausbildung des Vorsprungs vermag gegenüber einer zentrisch angeordneten zapfenförmigen Ausbildung aufgrund günstigerer Lastverteilung grössere Scherkräfte zu übertragen.

Nach einem weiteren Vorschlag der Erfindung ist die Kontaktfläche von einem die Benetzung des Lotes verhindernden Mittel eingegrenzt. Solche Mittel sind handelsüblich und werden in aller Regel als "stop off" bezeichnet. Das Auftragen solcher Mittel kann in einfacher und rationeller Weise automatisiert erfolgen, dh eine Serie von Widerlagern bzw Betätigungsorganen wird lagerichtig nacheinander auf einem Förderband an einer Beschickungsstelle vorbeigeführt, wo das "stop off", beispielsweise mittels Uebertragungswalzen, exakt aufgebracht wird.

Die Kontaktfläche kann so auf einer der einander zugewandten Flächen von Widerlager und Betätigungsorgan geschaffen werden. Ebenso ist es möglich, die Kontaktfläche auf einem Vorsprung des Widerlagers bzw des Betätigungsorgans vorzusehen.

Vorzugsweise deckt die Kontaktfläche 10 bis 50 % einer der einander zugewandten Flächen von Widerlager und Betätigungsorgan ab. Zweckmässig setzt sich die Kontaktfläche aus gegenüber dem Zentrum symmetrisch bzw punktsymmetrisch angeordneten Bereichen zusammen. Die geometrische Form dieser Bereiche kann beliebig gewählt sein. Bewährt haben sich Formen wie Kreisabschnitte, Ringsegmente und dgl.

Nebst den geschilderten anwendungsbezogenen Einflussfaktoren wird die Form und Ausdehnung der Kontaktfläche insbesondere auch auf die Art des verwendeten Lotes abgestimmt. Es eignen sich sowohl Hart- als auch Weichlote. Hartlote, beispielsweise auf Kupfer- oder Nickel-Basis, werden aus Gründen der höheren Belastbarkeit bevorzugt, haben jedoch gegenüber den Weichloten den Nachteil, dass aufgrund der hohen Arbeitstemperatur eine Nachhärtung des Werkstückes erfolgen muss.

Der Wert einer Verankerung in vorliegendem Sinne hängt entscheidend von der Vorspannung, welche dem Spreizdübel beim Setzen zugeführt wird, ab. Es ist bekannt, dass diese Vorspannung, auch axiale Einspannkraft genannt, innerhalb weniger Stunden nach Setzen des Spreizdübels abfällt. Nach diesem Abfallen bleibt die Spannung auf dem niedrigeren Wert in etwa konstant. Wird im wesentlichen der gleiche Betrag an Vorspannung nochmals aufgebracht, findet wiederum ein Abfall statt, welcher jedoch gegenüber dem ersten wesentlich geringer ausfällt. Durch geeignete Wahl der Vorspannungen kann demnach erreicht werden, dass nach Aufbringen der zweiten Vorspannung der Abfall derart gering ist, dass ein zulässiger Wert nicht mehr unterschritten wird.

Der vorliegenden Erfindung liegt demnach ferner die Aufgabe zugrunde, eine der Erzielung einer vorbestimmten ersten und zweiten Vorspannung dienenden Drehmoment-Steuerung bzw -Begrenzung zu schaffen. Diese weitergehende Aufgabe wird insbesondere in Anlehnung an die vorgängigen erfindungsgemässen Vorschläge durch ein am Betätigungsorgan angeordnetes weiteres Betätigungsorgan gelöst, wobei wenigstens eines dieser Teile eine Kontaktfläche zur flächenartigen Eingrenzung einer vor Ueberschreiten des vorbestimmten Drehmomentes zerstörbaren Lötverbindung zwischen Betätigungsorgan und weiterem Betätigungsorgan aufweist. Die Ausbildung der Kontaktfläche zwischen Betätigungsorgan und weiterem Betätigungsorgan erfolgt mit Vorteil entsprechend den Vorschlägen zur Kontaktfläche zwischen Betätigungsorgan und Widerlager.

Das vorbestimmte Drehmoment im Sinne des erfindungsgemässen Vorschlages ist demnach auf die zweite Vorspannung ausgerichtet. Der Spannvorgang eines Spreizdübels mit Widerlager entsprechend diesem weiteren Vorschlag erfolgt demnach dadurch, dass auf das weitere Betätigungsorgan ein Drehmoment aufgebracht wird. Hat dieses Drehmoment eine der Erzielung der ersten Vorspannung dienende Grösse erreicht, wird die Lötverbindung zwischen weiterem Betätigungsorgan und Betätigungsorgan zerstört. Nach der aus Erfahrungswerten bestimmten Zeit, welche in der Regel wenige Stunden beträgt, wird ein Drehmoment auf das Betätigungsorgan aufgebracht. Sobald das auf die zweite Vorspannung ausgerichtete vorbestimmte Drehmoment überschritten ist, wird die Lötverbindung zwischen Betätigungsorgan und Widerlager zerstört. Damit steht fest, dass dem Spreizdübel ein zweites Mal eine Vorspannung erteilt wurde, und zwar derart, dass der Vorspannungsabfall nicht mehr unter den für die jeweilige Befestigung massgebenden zulässigen Wert abfällt. Es besteht dadurch Gewähr, dass die Verankerung einen ausreichenden Wert aufweist.

Die Erfindung wird nachstehend anhand einer sie beispielhaft wiedergebenden Zeichnung näher erläutert. Es zeigen:

Fig. 1     ein Widerlager mit Betätigungsorgan und Gewindebolzen, in Verbindung mit einem Spreizdübel, halb Schnitt halb Ansicht,

Fig. 2     einen Schnitt II-II durch die Anordnung gemäss Fig. 1,

Fig. 3     einen Schnitt entsprechend Fig. 2 mit abweichend gebildeter Kontaktfläche,

Fig. 4     eine Anordnung analog Fig. 1 mit einem weiteren Betätigungsorgan.

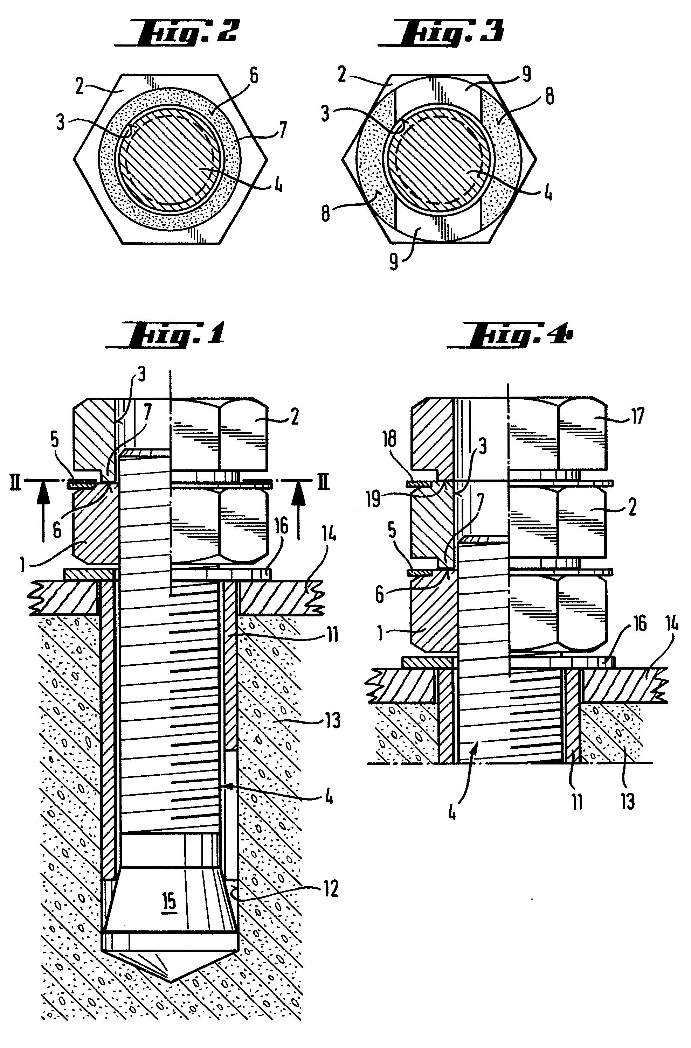

Dem in Fig. 1 dargestellten, als Sechskantmutter ausgebildeten Widerlager 1 ist ein Betätigungsorgan 2 zugeordnet. Letzteres ist im wesentlichen als Ring mit Aussensechskant gestaltet, dessen Bohrung 3 einen grösseren Durchmesser als
der Aussendurchmesser eines in das Widerlager 1 eingeschraubten, insgesamt mit 4 bezeichneten Gewindebolzens besitzt.

Ein Uebergreifen des am Betätigungsorgan 2 anfassenden Werkzeugs auf das Widerlager 1 wird durch eine radial überragende Scheibe 5 verhindert.

Das Widerlager 1 ist mit dem Betätigungsorgan 2 im Bereich
einer Kontaktfläche 6 verlötet, welche durch die Stirnseite
eines ringförmigen Vorsprunges 7 am Betätigungsorgan 2 gebildet ist. Die der Lötverbindung dienende Kontaktfläche 6
weist somit, wie die Fig. 2 verdeutlicht, kreisringförmige
Konfiguration auf.

Zum Herstellen der in Fig. 1 bzw 2 gezeigten Lötverbindung
wird zwischen Widerlager 1 und Betätigungsorgan 2 Lot, beispielsweise in Form einer Folie, eingelegt. Das Betätigungsorgan 2 wird sodann gleichachsig an die zugewandte Stirnseite des Widerlagers 1 gepresst. Durch entsprechende Wärmezufuhr kommt es alsdann zur Ausbildung der Lötverbindung im
Bereich der Kontaktfläche 6.

Die in Fig. 3 gezeigten kreisabschnittförmigen, der Lötverbindung dienenden Kontaktflächen 8 werden geschaffen, indem
vorerst die nicht mit Lot zu benetzende Zone 9 der dem Widerlager 1 zugewandten planen Stirnfläche des Betätigungsorgans
2 mit einem auf chemischer Basis beruhenden "stop off" versehen wird. Die Zone 9 bildet zusammen mit dem kontruktiv
vorgegebenen Rand der Stirnfläche die exakt eingegrenzte
Kontaktfläche bzw Kontaktflächen 8. Zwischen das Betätigungsorgan 2 und das Widerlager 1 wird alsdann beispielsweise
eine Lotfolie eingelegt. Darauffolgendes Zusammenpressen der
Teile und Zufuhr von Wärme führt zur Ausbildung der Lötverbindung. Die Schaffung der Kontaktfläche 8 ist dieserart
besonders einfach, da die teilweise mit "stop off" zu versehende plane Stirnfläche kontruktiv vorgegeben eine exakte kreisförmige Eingrenzung besitzt, so dass das "stop off" im gezeigten Beispiel lediglich in Form eines durchgehenden Streifens, entsprechend der Zone 9, aufgebracht werden kann.

Der Gewindebolzen 4 durchragt eine Spreizhülse 11, die in eine Aufnahmebohrung 12 eines Aufnahmeteiles 13 aus Beton, Gestein oder dgl eingeführt ist und einen zu befestigenden Gegenstand 14 durchragt. Ein Spreizkegel 15 am einführrichtungsseitigen Ende des Gewindebolzens 4 greift in das einführrichtungsseitige Ende der Spreizhülse 11 ein. Der aussenseitigen Abstützung der Spreizhülse 11 dient eine Unterlagscheibe 16.

Zum Aufbringen der Vorspannung auf die Anordnung gemäss den Fig. 1 bis 3 wird das Betätigungsorgan 2 mit einem herkömmlichen Werkzeug im Aufschraubsinne des Widerlagers 1 gedreht. Ueber die im Bereich der Kontaktfläche 6 bzw 8 geschaffene Lötverbindung wird das Widerlager 1 dabei mitgedreht. Letzteres läuft alsdann unter Zwischenlage der Unterlagscheibe 16 am Gegenstand 14 auf und hält diesen so gegen den Aufnahmeteil 13. Der Gewindebolzen 4 wird von dem Widerlager 1 in die Spreizhülse 11 eingezogen, wodurch diese sich in der Aufnahmebohrung 12 verspreizt. Nach dem Auflaufen des Widerlagers 1 nimmt die Verspreizung und auch die Spannung durch Weiterdrehen des Betätigungsorgans 2 zu. Dadurch wird auch das am Betätigungsorgan 2 aufzubringende Drehmoment grösser. Dieses grösser werdende Drehmoment muss von der sich über die Kontaktfläche 6 bzw 8 erstreckenden Lötverbindung auf das Widerlager 1 übertragen werden. Durch entsprechende Wahl des Lotes bzw entsprechende Ausbildung und Anordnung der durch die Kontaktfläche 6 bzw 8 flächenhaft eingegrenzten Lötverbindung ist ein auf das Erreichen der jeweiligen Vorspannung abgestimmtes rechtzeitiges Ansprechen bzw Zerstören der Lötverbindung steuerbar. Wird beim Spannvorgang das auf die Vorspannung abgestimmte Drehmoment überschritten, bricht die Lötverbindung - das Betätigungsorgan 2 ist sodann gegenüber dem Widerlager 1 frei drehbar bzw fällt von diesem ab.

Um nach allfälligem Abfallen der Vorspannung zur Reduzierung
des Abfallens eine zweite Vorspannung aufbringen zu können,
zeigt die Anordnung gemäss Fig. 4 ein weiteres Betätigungsorgan 17, das auf dem Betätigungsorgan 2, beispielsweise entsprechend Anordnung gemäss Fig. 1, sitzt. Die der Fig. 1 entsprechenden Teile sind in Fig. 4 mit denselben Bezugszeichen
versehen.

Ein Uebergriff des Werkzeugs vom weiteren Betätigungsorgan
17 auf das Betätigungsorgan 2 wird durch eine Scheibe 18
verhindert.

Zwischen dem weiteren Betätigungsorgan 17 und dem Betätigungsorgan 2 besteht wiederum eine den Fig. 2 und 3 entsprechende
Lötverbindung im Bereich einer Kontaktfläche 19. Aus den
voran geschilderten Gründen ist diese Lötverbindung schwächer ausgebildet als jene zwischen dem Betätigungsorgan 2
und dem Widerlager 1.

Für den ersten Spannvorgang wird über das weitere Betätigungsorgan 17 bis zum Bersten der schwächeren Lötverbindung ein
Drehmoment aufgebracht. Das weitere Betätigungsorgan 17 fällt
dann vom Betätigungsorgan 2 ab. Nach einigen Stunden wird
über das Betätigungsorgan 2 eine zweite Vorspannung aufgebracht, die dann erreicht ist, wenn auch die stärkere Lötverbindung bricht. Das Befestigungsorgan 2 fällt dann vom Widerlager 1 ab.

Um ein nachträgliches Manipulieren am Widerlager 1 zu unterbinden bzw sichtbar zu machen, kann auf dem Widerlager eine
an sich bekannte, Schlüsselflächen des Widerlagers übergreifende Schutzhaube vorgesehen sein. Diese kann beispielsweise
aus sprödem Material, wie Kunststoff oder Metall, bestehen.
Ein Angriff eines Werkzeugs an den Schlüsselflächen bedingt
also die vorherige Zerstörung der Schutzhaube.

HILTI AKTIENGESELLSCHAFT IN SCHAAN
Fürstentum Liechtenstein

<u>Patentansprüche</u>

1.  Widerlager mit dem Aufbringen eines Drehmomentes dienendem Betätigungsorgan für Gewindebolzen von Spreizdübeln, wobei zwischen Widerlager und Betätigungsorgan
    eine bei Ueberschreiten eines vorbestimmten Drehmomentes zerstörbare, flächenhaft eingegrenzte Lötverbindung
    vorgesehen ist, d a d u r c h   g e k e n n z e i c h -
    n e t ,  dass zur flächenhaften Eingrenzung der Lötverbindung wenigstens eines der Teile (1, 2) eine der Lötverbindung dienende Kontaktfläche (6, 8) aufweist.

2.  Widerlager nach Anspruch 1, dadurch gekennzeichnet,
    dass die Kontaktfläche (6) an einem Vorsprung (7) angeordnet ist.

3.  Widerlager nach Anspruch 1 oder 2, dadurch gekennzeichnet, dass der Vorsprung (7) ringförmig ausgebildet ist.

- - -

0098575

4. Widerlager nach einem der Ansprüche 1 bis 3, dadurch gekennzeichnet, dass die Kontaktfläche (8) von einem die Benetzung verhindernden Mittel (stop off) eingegrenzt ist.

5. Widerlager nach einem der Ansprüche 1 bis 4, dadurch gekennzeichnet, dass die Kontaktfläche (6, 8) 10 bis 50 % einer der einander zugewandten Flächen von Widerlager (1) und Betätigungsorgan (2) abdeckt.

6. Widerlager, insbesondere nach einem der Ansprüche 1 bis 5, gekennzeichnet durch ein am Betätigungsorgan (2) angeordnetes weiteres Betätigungsorgan (17), wobei wenigstens eines dieser Teile eine Kontaktfläche (19) zur flächenhaften Eingrenzung einer vor Ueberschreiten des vorbestimmten Drehmomentes zerstörbaren Lötverbindung zwischen Betätigungsorgan (2) und weiterem Betätigungsorgan (17) aufweist.

**Fig. 2**

**Fig. 3**

**Fig. 1**

**Fig. 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-U-1 941 125 (VEREINIGTE FLUGTECHNISCHE WERKE) * Anspruch 3 * | 1,3 | F 16 B 13/00 |
| Y | FR-A-2 171 364 (HANSEN MANUFACTURING CO.) * Anspruch 1 * | 1 | |
| Y | US-A-3 867 865 (DAHL) * Zusammenfassung * | 1,3 | |
| A | DE-A-2 842 989 (FISCHER) | | |

RECHERCHIERTE SACHGEBIETE (Int. Cl. 3)

F 16 B 13/00
F 16 B 33/04

Der vorliegende Recherchenbericht wurde für alle Patentansprüche erstellt.

| Recherchenort | Abschlußdatum der Recherche | Prüfer |
|---|---|---|
| BERLIN | 27-09-1983 | ZAPP E |